Europäisches Patentamt

European Patent Office

Office européen des brevets

(11) Veröffentlichungsnummer: **0 355 267**
**A1**

## (12) EUROPÄISCHE PATENTANMELDUNG

(21) Anmeldenummer: 89107978.2

(51) Int. Cl.4: **C01B 33/34**

(22) Anmeldetag: 03.05.89

(30) Priorität: 30.06.88 DE 3822151

(43) Veröffentlichungstag der Anmeldung:
28.02.90 Patentblatt 90/09

(84) Benannte Vertragsstaaten:
AT BE CH DE ES FR GB IT LI NL SE

(71) Anmelder: Degussa Aktiengesellschaft
Weissfrauenstrasse 9
D-6000 Frankfurt am Main 1(DE)

(72) Erfinder: Dörr, Mürgen, Dr.
Buchenweg 11
D-5040 Brühl(DE)

(54) Verfahren zur Herstellung von Zeolith NaA.

(57) Verfahren zur Herstellung von Zeolith NaA, bei welchem man pulverförmigen Zeolithen NaA mit der Zusammensetzung

$1,0 \pm 0,2\ Na_2O : Al_2O_3 : 1,85 \pm 0,5\ SiO_2 . yH_2O$,

wobei y einen Wert bis zu 6 bedeutet, mit 50 Gew.-% unter höchstens 4,0 μm liegenden Teilchen und Teilchenspektrum

| Fraktion (μm) | Anteil (Gew.-%) |
|---|---|
| < 3 | 35 bis 60 |
| < 5 | 82 bis 95 |
| <10 | 93 bis 99 |
| <15 | 96 bis 100 |

als Keimzentrum einsetzt.

EP 0 355 267 A1

## Verfahren zur Herstellung von Zeolith NaA

Die Erfindung betrifft ein Verfahren zur Herstellung von Zeolith NaA.

Es ist bekannt, ein kristallines Zeolithpulver des Typs A mit der Zusammensetzung

$1,0 \pm 0,2$ $Na_2O$ : $Al_2O_3$ : $1,85 \pm 0,5$ $SiO_2$ . $yH_2O$,

wobei y einen Wert bis zu 6 bedeutet, mit 50 Gew.-% unter höchstens 4,0 μm liegenden Teilchen und Teilchenspektrum

| Fraktion (μm) | Anteil (Gew.-%) |
|---|---|
| < 3 | 35 bis 60 |
| < 5 | 82 bis 95 |
| <10 | 93 bis 99 |
| <15 | 96 bis 100 |

dadurch herzustellen, daß man eine wäßrige Natriumsilikatlösung vorlegt, diese auf eine Temperatur zwischen 30 und 80 °C erwärmt, unter Rühren eine auf Temperatur von 30 bis 100 °C vorgewärmte Natriumaluminatlauge mit einem Gehalt von 0,1 bis 100 g $Al_2O_3$/l und 1 bis 200 g $Na_2O$/l zu der vorgelegten Natriumsilikatlösurg bis zum Trübungspunkt der Reaktionsmischung innerhalb von 10 bis 60 Minuten zugibt, zu der trüben Reaktionsmischung, welche die Zusammensetzung $SiO_2/Al_2O_3$ = 2 bis 50, $Na_2O/SiO_2$ = 0,2 bis 20 und $H_2O/Na_2O$ = 4 bis 300 enthält, eine Natriumaluminatlauge, welche 10 bis 200 g/l $Al_2O_3$, und 10 bis 250 g/l $Na_2O$ enthält, mit einer Temperatur von 10 bis 100 °C unter Rühren in zwei Stufen hinzugibt, wobei die Zugabegeschwindigkeit in der zweiten Stufe zwei- bis zehnfach höher liegt als in der ersten Stufe, und die so erhaltenen Synthesemischung bei einer Temperatur zwischen 20 und 175 °C innerhalb von wenigstens 15 Minuten kristallisieren läßt (DE-PS 26 60 723).

Bei diesem bekannten Verfahren wird nach der Aufheizphase zur Bildung optimaler Kristalle eine längere Kristallisationsphase angeschlossen.

Das Produkt dieses bekannten Verfahrens wird als Phosphatsubstitut bzw. als Builder in Waschmitteln eingesetzt. Aus diesem Grunde muß bei der Herstellung ein möglichst hohes Calciumbindevermögen und eine definierte Teilchengrößenverteilung wiederholbar gewährleistet sein.

Um eine ungestörte und wiederholbare Teilchengrößenverteilung des Zeolith A zu ermöglichen, wird bei dem bekannten Verfahren auf die Verwendung von Impfsubstanzen verzichtet.

Die Verwendung von Impfsubstanzen bei der Zeolithsynthese allgemein ist bekannt.

So wird in der DE-OS 35 38 416 die Herstellung Faujasit unter Verwendung einer amorphen Impfsubstanz beschrieben.

Gemäß US-PS 33 10 373 werden die gerade gebildeten Kristalle in einer Kugelmühle gemahlen, wodurch vermutlich Impfzentren entstehen. Über die Teilchengrößenverteilung wird in dieser Druckschrift keine Aussage gemacht.

Aus der US-PS 30 71 434 ist es bekannt, kristallinen Zeolith des Typ NaA durch Recyclieren des hergestellten kristallinen Produktes zu impfen. Über die Teilchengrößenverteilung des Produktes wird in der US-PS 30 71 434 nichts ausgesagt.

Gegenstand der Erfindung ist ein Verfahren zur Herstellung von Zeolith NaA, welches dadurch gekennzeichnet ist, daß man pulverförmigen Zeolithen NaA mit der Zusammensetzung

$1,0 \pm 0,2$ $Na_2O$ : $Al_2O_3$ : $1,85 \pm 0,5$ $SiO_2$ . $^2H_2O$,

wobei y einen Wert bis zu 6 bedeutet, mit 50 Gew.-% unter höchstens 4,0 μm liegenden Teilchen und Teilchenspektrum

| Fraktion (μm) | Anteil (Gew.-%) |
|---|---|
| < 3 | 35 bis 60 |
| < 5 | 82 bis 95 |
| <10 | 93 bis 99 |
| <15 | 96 bis 100 |

als Keimzentren einsetzt.

Der pulverförmige Zeolith NaA wird nach einem bekannten Verfahren gemäß DE-PS 26 60 723 hergestellt. Dies geschieht, indem man eine wäßrige Natriumsilikatlösung vorlegt, diese auf eine Temperatur zwischen 30 und 80 °C erwärmt, unter Rühren eine auf eine Temperatur von 30 bis 100 °C vorgewärmte Natriumaluminatlauge mit einem Gehalt von 0,1 bis 100 g Al$_2$O,/l und 1 bis 200 g Na$_2$O/l zu der vorgelegten Natriumsilikatlösung bis zum Trübungspunkt der Reaktionsmischung innerhalb von 10 bis 60 Minuten zugibt, zu der trüben Reaktionsmischung, welche die Zusammensetzung SiO$_2$/Al$_2$O$_3$ = 2 bis 50, Na$_2$O/SiO$_2$ = 0,2 bis 20 und H$_2$O/Na$_2$O = 4 bis 300 enthält, eine Natriumaluminatlauge, welche 10 bis 200 g/l Al$_2$O$_3$ und 10 bis 250 g/l Na$_2$O enthält, mit einer Temperatur von 10 bis 100 °C unter Rühren in zwei Stufen hinzugibt, wobei die Zugabegeschwindigkeit in der zweiten Stufe zwei- bis zehnfach höher liegt als in der ersten Stufe, und die so erhaltene Synthesemischung bei einer Temperatur zwischen 20 und 175 °C innerhalb von wenigstens 15 Minuten kristallisieren läßt.

In einer bevorzugten Ausführungsform der Erfindung wird der als Impfkristall eingesetzte kristalline Zeolith des Typs NaA in dem Verfahren gemäß DE-PS 26 60 723 eingesetzt. Die Zugabe der Impfkristalle kann zu jedem Zeitpunkt der Reaktion erfolgen, vorzugsweise vor dem Ende der Aluminatzugabe.

Die Zugabe von Impfkristallen erfolgt sowohl bei den bekannten Verfahren als auch bei dem erfindungsgemäßen Verfahren um den Effekt einer Verkürzung der Kristallisationszeit zu bewirken.

Überraschenderweise entsteht jedoch bei dem erfindungsgemäßen Verfahren ein kristalliner Zeolith, der die gleiche Teilchengrößenverteilung wie die Impfkristalle aufweist und gritfrei ist.

Wenn man von der Theorie des Kristallwachstums ausgeht, sollte man annehmen, daß die Impfkristalle kleiner sein müssen als das gewünschte Produkt, weil die Kristallisation bevorzugt an vorhandenen Keimstellen stattfindet.

Der besondere Vorteil des erfindungsgemäßen Verfahrens besteht nun überraschenderweise darin, daß bereits nach Abschluß der Aufheizphase das Produkt die gewünschten Eigenschaften wie Calciumbindevermögen, Gritfreiheit und Teilchengrößenverteilung aufweist.

Eine anschließende Kristallisationsphase ist nicht mehr notwendig.

Beispiele

In einem 150 l umfassenden Trog wird Wasserglas vorgelegt.

Unter Rühren wird zu dem 50 °C warmen Wasserglas Aluminatlauge I von 80 °C innerhalb 30 Minuten zudosiert. Gegen Ende der Zugabe tritt eine Trübung auf.

Zu der leicht trüben Lösung werden zunächst in 45 Minuten 20 l, dann in 30 Minuten der Rest der Aluminatlauge II (Temperatur der Aluminatlauge II: 70 °C) zugegeben. Die Reaktionsmischung wird auf 87 °C aufgeheizt. Danach wird der Feststoff abfiltriert, gewaschen, getrocknet und analysiert.

Die Konzentrationen der verwendeten Lösungen und die Zusammensetzung der Fällmischungen können aus Tabelle 1 entnommen werden.

Die Analysendaten können Tabelle 2 entnommen werden. Die Bestimmung der Teilchengröße erfolgt durch Coulter-Counter-Messung. Die Bestimmung der Kristallphase erfolgt röntgenographisch.

Beispiel 1 enthält keine Impfkristalle. Die Beispiele 2 - 4 enthalten 2 - 3 % Impfkristalle, hergestellt gemäß DE-PS 26 60 723.

Tabelle 1

| Beispiel | 1 | 2 | 3 | 4 |
|---|---|---|---|---|
| Wasserglas (1) | 25 | 25 | 25 | 25 |
| $Na_2O$ (g/l) | 107 | 107 | 107 | 107 |
| $SiO_2$ (g/l) | 347,5 | 347,5 | 347,5 | 347,5 |
| Natriumaluminatlauge (1) | 28,7 | 26,8 | 33,2 | 24,7 |
| $Na_2O$ (g/l) | 96,7 | 103,8 | 98,5 | 94,8 |
| $Al_2O_3$ (g/l) | 6,4 | 6,5 | 9,6 | 7,1 |
| Natriumaluminatlauge (1) | 71,2 | 77,4 | 66,8 | 72,4 |
| $Na_2O$ (g/l) | 182,8 | 179,7 | 160,3 | 162,6 |
| $Al_2O_3$ (g/l) | 96,3 | 94,3 | 99,4 | 93,8 |
| Impfkristalle* | - | 2 % | 2 % | 3 % |

* bezogen auf Zeolith A, atro

Folgende Lösungen werden eingesetzt:

| Wasserglas | $Na_2O$ : | 107 g/l | $\rho = 1{,}35$ g/cm$^3$ |
|---|---|---|---|
| | $SiO_2$ : | 347,5 g/l | |
| Natriumaluminatlauge | $Na_2O$ : | 94,8 - 103,8 g/l | $\rho = 1{,}10$ g/cm$^3$j |
| | $Al_2O_3$ : | 6,4 - 9,6 g/l | |
| Natriumaluminatlauge | $Na_2O$ : | 160,3 - 182,8 g/l | $\rho = 1{,}27$ g/cm$^3$ |
| | $Al_2O_3$ : | 93,8 - 99,4 g/l | |

Tabelle 2

| Beispiel | 1 | 2 | 3 | 4 |
|---|---|---|---|---|
| 1 Kristallphase | amorph | Zeolith A | Zeolith A | Zeolith A |
| 2 Teilchengrössenverteilung | | | | |
| < 3 μm | 10 % | 55 % | 55 % | 53 % |
| < 4 μm | 15 % | 67 % | 66 % | 69 % |
| < 5 μm | 23 % | 93 % | 89 % | 93 % |
| < 10 μm | 34 % | 99 % | 98 % | 98 % |
| < 15 μm | 41 % | 100 % | 100 % | 100 % |

**Ansprüche**

1 . Verfahren zur Herstellung von Zeolith NaA, dadurch gekennzeichnet, daß man pulverförmigen kristallinen Zeolithen NaA mit der Zusammensetzung

$1{,}0 \pm 0{,}2\ Na_2O : Al_2O_3 : 1{,}85 \pm 0{,}5\ SiO_2 \cdot yH_2O$,

wobei y einen Wert bis zu 6 bedeutet, mit 50 Gew.-% unter höchstens 4,0 μm liegenden Teilchen und Teilchenspektrum

| Fraktion (μm) | Anteil (Gew.-%) |
|---|---|
| < 3 | 35 bis 60 |
| < 5 | 82 bis 95 |
| <10 | 93 bis 99 |
| <15 | 96 bis 100 |

als Keimzentrum einsetzt.

Europäisches
Patentamt

**EUROPÄISCHER RECHERCHENBERICHT**

Nummer der Anmeldung

EP 89 10 7978

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 002 960 (FMC CORP.) <br> * Seite 3, Zeilen 9-11,20-23,33-35; Seite 9, Tabelle 1; Anspruch 1 * <br> --- | 1 | C 01 B 33/34 |
| Y | FR-A-2 370 688 (DEGUSSA et al.) <br> * Ansprüche * <br> --- | 1 | |
| A | US-A-4 406 823 (LAURENT et al.) <br> * Spalte 8, Beispiel 1; Anspruch 1 * <br> --- | 1 | |
| A,D | US-A-3 071 434 (V.J. FRILETTE et al.) <br> * Spalte 1, Zeilen 43-52; Anspruch 1 * <br> ----- | 1 | |

**RECHERCHIERTE SACHGEBIETE (Int. Cl.4)**

C 01 B

Der vorliegende Recherchenbericht wurde für alle Patentansprüche erstellt

| Recherchenort | Abschlußdatum der Recherche | Prüfer |
|---|---|---|
| DEN HAAG | 28-06-1989 | MINI A.E. |